# EUROPEAN PATENT APPLICATION

(11) **EP 3 226 336 A1**
(43) Date of publication of application: **04.10.2017**
(21) Application number: 16162941.5
(22) Date of filing: 30.03.2016
(51) Int. Cl.: H01M 8/16, H01M 4/88

(54) **BIOFUEL CELLS AND BIOREACTOR COMPOSED OF BIOCATALYTIC COMPLEX COMPRISING STERILIZED SOIL**

(71) Applicant: INSTITUT NATIONAL DE LA RECHERCHE AGRONOMIQUE, 75007 Paris (FR); Institut d'Enseignement Supérieur et de Recherche en Alimentation, Santé Animale, Sciences Agronomiques et de l'Environnement, 69280 Marcy l'Etoile (FR); Institut National d'Etudes Superieures Agronomiques de Montpellier, 34060 Montpellier (FR)
(72) Inventor: FONTAINE, Sébastien, 63530 Volvic (FR); ALVAREZ, Gaël, 63350 Culhat (FR); DUBREUCQ, Eric, 34000 Montpellier (FR)
(74) Representative: Gevers & Orès

(57) **Abstract**

The present invention consists in biofuel cells and bioreactors of biocatalytic complex comprising sterilized soil ; such biofuel cells and bioreactors use in *vitro* methods of reconstituting, manipulating and coupling multistep biochemical reactions or complete biochemical processes usually encountered in living cells using extracellular components of the intracellular metabolism (substrates, enzymes, co-factors) naturally present in soil matrix after sterilisation, such components of the intracellular metabolism may alternatively be added to said sterilized soil matrix.

## Description

The present invention consists of *in vitro* methods of reconstituting, manipulating and coupling multistep biochemical reactions or complete biochemical processes usually encountered in living cells using extracellular components of the intracellular metabolism (substrates, enzymes, co-factors) naturally present in soil matrix after sterilisation, such components of the intracellular metabolism may alternatively be added to said sterilized soil matrix.

This invention lies on the discovery that the soil matrix contains numerous extracellular bio- and chemical catalysts (enzymes, metals, minerals) able to mediate the multistep chemical reactions typically found in living cells; this phenomenon has been firstly described by Maire et al. (Biogeosciences, 10, 1155-1167, 2013) who highlighted a respiratory release of CO₂ from sterilized soils.

The article from Maire *et al.* raised several questions from the scientific community regarding the fact that the observed chemical reactions could only be mediated by extracellular soil components and if the tested soil was properly sterilized.

The Inventors pursue the works presented by Maire *et al.;* they conformed those observations and also the occurrence of biochemical reactions mediated by extracellular catalytic components, they further demonstrated a high stabilisation of those extracellular catalytic components in the soil (maintenance of catalytic activities during >1600 days) (submitted manuscript).

Based on these additional results, the Inventors have developed biocatalytic complex composed of sterilized soil in which complex multistep biochemical reactions may be carried out; such biocatalytic complex can be used in bioreactors for:
1) The production of electricity due to the deep or complete oxidation of organic compounds in biofuel cell.
2) The production of organic components of interest through a metabolic engineering using soil catalysts and/or soil matrix to stabilize enzymes, an alternative to current approach based on genetically modified organisms. The considered products are fuels, foods and chemical compounds with added value. The invention can also be used to convert mineral compounds (H₂O, CO₂) and electricity into organic compounds which can further be used as source of energy in proposed biofuel cell or other systems. Therefore, this electrochemical conversion represents a mean to store energy.

Accordingly, the present invention relates to biofuel cell composed of:
- an anode comprising a biocatalytic complex composed of a sterilized soil and optionally an electrolyte, and a first conductive material partially entrapped into said sterilized soil; and
- a cathode comprising a second conductive material in the presence of O₂;
   wherein soil matrix contains at least one of the two following properties:
   - the presence of organic or mineral catalyzers including enzymes stabilized on soil particles (e.g. enzymes of Krebs cycle), metallic species (e.g. Fe²⁺/³⁺), minerals (e.g. clay) or other organo-mineral catalyzers; and/or
   - the presence of organic or mineral particles allowing the stabilization of at least two different catalyzers.

In such biofuel cell, the sterilized soil of the anode is able to convert chemical energy from organic compounds (CO₂ released by oxidation reduction) already present in or added to said soil into electricity.

There are different ways to define a soil: its origin, its composition, its physical and chemical properties, its agronomic qualities, etc.

In the context of the present invention, a soil is defined as a complex medium, essentially inorganic, porous, and comprising microbial-transformed organic matter.

The term "soil" thus refers to any natural soil or natural soil mixture, but also to any combination of components (such as sand, silt, clay and/or synthetic structures) capable of reproducing the physical properties (presence of aggregates,...) and chemical (oxidation-reduction properties,...) of natural soils which are extensively described in the scientific literature (Jenny, H. 1941. Factors of soil formation: a system of quantitative pedology. McGraw-Hill, New York; Calvet, R. 2003. Le sol: propriétés et fonctions. Tome 1 Constitution, structure et phénomènes aux interfaces. Editions France Agricole. Paris; Wesley, L.D. 2009. Soil formation, composition and basic concepts, in Fundamentals of soil mechanics for sedimentary and residual soils, John Wiley & Sons, Inc, Holokin, NJ, USA).

For the purpose of the invention, the preferred physico-chemical properties of soil are:
- the presence of fine mineral and/or organic particles (clay, loam) having an apparent diameter lower than 200 microns, preferably lower than 50 microns with a specific surface area higher than 5 m².g⁻¹ and containing positive and/or negative electric charges; these fine particles can adsorb catalyzers or act as catalyzers. The concentration of fine particles is preferentially comprised between 100 and 900 g.kg⁻¹ soil;
- The presence of electric charges on soil particles. These charges promote adsorption of catalyzers and electric connectivity of soil matrix. The electric charges of soil particles can be estimated by measuring the cationic exchange capacity (CEC) using the method of Metson (Metson, A.J., 1956. Methods of chemical analysis for soil survey samples. NZ Soil Bur Bull n°12). The CEC of soil particles is preferentially comprised between 1 and 50 cmol.kg⁻¹ soil;
- The presence of humified soil organic matter (SOM) that can adsorb catalyzers or act as catalyzers;
- The SOM can also be used as a source of substrate for the purpose of the invention (biobattery);
- The fine textured minerals must be mixed with coarse textured materials (e.g. sand) to facilitate diffusion of soluble compounds and gas in soil matrix; the minimal concentration of coarse textured materials is preferentially greater than 100 g.kg⁻¹ soil;
- A micro-heterogeneity of soil pH and redox (at micro- and nanoscale);
- A buffer capacity: the soil matrix must contain cations and anions able to buffer variation of the pH;
- The porosity of soil matrix permitting gas and soluble compounds diffusion;
- The soil pH is preferentially between 3 to 9;
- The organic matter content is preferentially between 5 to 500 g of C kg⁻¹ soil;
- The soil organic matter must be preferentially humified (previously transformed by soil microorganisms) with C/N ratio between 5 and 20. The soil C/N ratio is determined after measurement of soil organic C and N content by combustion using an elemental analyzer.

The soil particles are defined as follows: clay (<0.2 microns), loam (2-50 microns) and fine sand (50-250 microns). All particles bigger than 250 microns are considered as coarse sand and stone and are not essential for the invention.

The soil may be of natural or of synthetic origin.

A soil matrix can be artificially prepared by mixing minerals of different sizes (clay, loam and sand) in different proportions.

This mineral matrix can be activated by adding organic matter and different catalyzers, this activation can be performed by incubating soil minerals with micro-organisms before sterilization or by addition of extracellular components, such as enzymes, co-factors, metals, minerals, before or after sterilization.

Table 1 below presents some examples of physico-chemical composition of soils usable for the invention.

**Table I**

| **Sampling information** | | | ***Soil texture* (*in g per kg*)** | | | | | **Soil chemical properties** | | | | **Soil organic matter** | | |
|---|---|---|---|---|---|---|---|---|---|---|---|---|---|---|
| Soil layer (in cm) | Land use | Country | Clay | Fine loam | Coarse loam | Fine sand | Coarse sand | CEC Met son (cmol+/kg) | Al oxides (g per 100g) | Fe oxides (g per 100 g) | pH | Soil organic C content (%) | Soil organic N content (%) | soil C/N |
| 0-20 | Grassland | Austria | 163 | 265 | 146 | 169 | 257 | 20,7 | 0,458 | 2,09 | 6,6 | 5.60 | 0,67 | 8.43 |
| 0-20 | Grassland | Brazil | 143 | 39 | 21 | 270 | 527 | 3,94 | 0,475 | 2,05 | 7 | 1,48 | 0,12 | 11,95 |
| 0-20 | Forest | Danemark | 101 | 109 | 115 | 440 | 235 | 9,52 | 0,182 | 0,55 | 4,3 | 3,37 | 0,37 | 9,13 |
| 40-60 | Forest | Danemark | 147 | 81 | 80 | 353 | 339 | 7,29 | 0,19 | 0,681 | 6,4 | 0,33 | 0,03 | 10,01 |
| 0-20 | Forest | Finland | 64 | 146 | 127 | 202 | 461 | 9,93 | 1,04 | 1.26 | 5,5 | 2,64 | 0,30 | 8,75 |
| 0-20 | Crops | France | 153 | 266 | 481 | 77 | 23 | 13,3 | 0,113 | 0,87 | 7,8 | 1,68 | 0,37 | 4,59 |
| 40-60 | Crops | France | 276 | 252 | 4)0 | 57 | 5 | 12,5 | 0,131 | 1,06 | 8 | 0,67 | 0,10 | 6,63 |
| 0-20 | Grassland | France | 193 | 452 | 98 | 79 | 178 | 25,1 | 1,88 | 3,2 | 5,3 | 12,19 | 1,66 | 7,33 |
| 40-60 | Grassland | France | 70 | 362 | 119 | 72 | 377 | 11,3 | 0,911 | 2,25 | 6,4 | 1,85 | 0,29 | 6,38 |
| 0-20 | Crops | Fance (FWI) | 672 | 190 | 46 | 42 | 50 | 12,3 | 1,08 | 6,95 | 4,9 | 1,20 | 0,20 | 5,96 |
| 0-20 | Forest | Germany | 194 | 207 | 177 | 307 | 115 | 10,5 | 0,222 | 0,815 | 4,2 | 2,61 | 0,14 | 18,93 |

| **Sampling information** | **Soil texture (in g per kg)** | **Soil chemical properties** | **Soil organic matter** | **Sampling information** | **Soil texture (in g per kg)** | **Soil chemical properties** | **Soil organic matter** | **Sampling information** | **Soil texture (in g per kg)** | **Soil chemical properties** | **Soil organic matter** | **Sampling information** | **Soil texture (in g per kg)** | **Soil chemical properties** |
|---|---|---|---|---|---|---|---|---|---|---|---|---|---|---|
| 40-60 | Forest | Germany | 283 | 205 | 177 | 251 | 84 | 10,9 | 0,444 | 1,8 | 4,9 | 0,43 | 0,05 | 9,39 |
| 0-20 | Forest | Nederland | 62 | 74 | 100 | 297 | 467 | 7,98 | <0.02 | 0,091 | 3 | 6,02 | 0,64 | 9,44 |
| 0-20 | Grassland | Hungary | 100 | 24 | 25 | 535 | 316 | 10,2 | <0.02 | <0.02 | 8,6 | 4,40 | 0,56 | 7,80 |
| 0-20 | Forest | Italy | 298 | 267 | 166 | 195 | 74 | 17,6 | <0.02 | 0,272 | 7,9 | 4,06 | 0,51 | 8,03 |
| 0-20 | Crops | Niger | 48 | 13 | 41 | 518 | 380 | 1,22 | 0,039 | 0,486 | 6,8 | 0,13 | 0,02 | 5,94 |
| 0-20 | Grassland | New Zealand | 297 | 281 | 200 | 101 | 121 | 25,2 | 0,492 | 1,54 | 6,5 | 4,26 | 0,30 | 14.27 |
| 0-20 | Crops | Pakistan | 88 | 94 | 109 | 401 | 308 | 3,69 | 0,109 | 0,509 | 9,1 | 1,18 | 0,07 | 16,52 |
| 0-20 | Forest | Quebec | 148 | 307 | 160 | 215 | 170 | 20,9 | 0,616 | 1,55 | 3,9 | 6,71 | 1,04 | 6,45 |
| 0-10 | Grassland | Russia | 249 | 310 | 328 | 80 | 33 | 16,7 | 0,093 | 0,605 | 7,2 | 2,18 | 0,33 | 6,59 |
| 0-20 | Crops | Russia | 493 | 366 | 121 | 15 | 5 | 40 | 0,301 | 1,01 | 7,3 | 5,15 | 0,80 | 6,46 |
| 0-20 | Savannah (herbaceous area) | Senegal | 75 | 20 | 49 | 474 | 382 | 5,26 | 0,054 | 0,398 | 7,2 | 0,61 | 0,08 | 7,65 |
| 40-60 | Savannah (herbaceous area) | Senegal | 64 | 11 | 25 | 488 | 412 | 3,54 | 0,052 | 0,418 | 7,6 | 0,40 | 0.06 | 7,08 |
| 0-20 | Grassland | UK | 175 | 145 | 99 | 313 | 268 | 10,4 | 0,208 | 1,43 | 6,3 | 2,26 | 0,21 | 10,69 |
| 0-20 | Peatland | UK | 305 | 255 | 107 | 202 | 131 | 38 | 0,463 | 0,475 | 4,8 | 21,97 | 3,30 | 6,66 |
| 0-20 | Crops | USA | 226 | 517 | 174 | 12 | 71 | 10,8 | 0,373 | 2,66 | 7,4 | 1,90 | 0,26 | 7,21 |
| 0-20 | Grassland | USA | 234 | 490 | 179 | 11 | 86 | 11,7 | 0,489 | 2,69 | 6,7 | 1,92 | 0,31 | 6,27 |
| 0-20 | Orchard | Vietnam | 680 | 141 | 49 | 71 | 59 | 9,68 | 1,06 | 8,82 | 5,3 | 2,34 | 0,27 | 8,55 |
| 10-40 | Savannah (herbaceous area) | South Africa | 238 | 62 | 62 | 158 | 480 | 20,8 | 0,293 | 2,64 | 7,9 | 1,43 | 0,17 | 8,42 |
| 0-20 | Grassland | France | 258 | 179 | 75 | 95 | 393 | 21,5 | 0,736 | 2,79 | 6,2 | 3,90 | 0,52 | 7,51 |
| 0-30 | Crops | Germany | 290 | 351 | 308 | 29 | 22 | 14,5 | 0,186 | 1,59 | 6.5 | 1,70 | 0,29 | 5,89 |

| | | | | | | | | | | | | | | |
|---|---|---|---|---|---|---|---|---|---|---|---|---|---|---|
| CEC: cationic exchange capacity. C: carbon. N: nitrogen. Al: aluminium. Fe: iron. | | | | | | | | | | | | | | |

For the purpose of the invention, the soil matrix must be sterilized by a highly efficient method in order to block microbial uptake and secretion of substrates, intermediate metabolites, co-factors and catalysts.

The soil is thus treated so that it does not contain any viable microorganism, viable cells being cells able to multiply and colonize soil matrix; the achievement of an efficient sterilization may be assessed by any method known by the person skilled in the art, for example, by cultivation, optical microscopy observations after live-dead staining and/or fluorescent *in situ* hybridization, biomass estimation (fumigation-extraction method), biomarkers concentration (DNA, RNA), electron microscopy observation (Vance et al., Soil Biology and Biochemistry, 19, 703-707, 1987; Danovaro et al., Applied Environmental Microbiology, 67, 1384-1387, 2001; McNamara et al., Applied Soil Ecology, 24, 117-132, 2003; Maire et al. Biogeosciences, 10, 1155-1167, 2013).

Soil matrix may be sterilized by any methods known by the person skilled in the art; said method may be chosen amongst irradiation with gamma rays (for example at 45 kGy), toxics (fumigation with ClCH₃, glutaraldehyde, formaldehyde, ethylene oxide...) and heat treatments (autoclaving, dry heating...) or combination thereof.

According to the present invention, an electrolyte is a substance that produces an electrically conducting solution when dissolved in a polar solvent, such as water; this includes most soluble salts, acids, and bases. The soil matrix naturally contains electrolytes, but their quantity might be insufficient, that is why the addition of electrolyte in the invention is optional but can improve the efficiency of process. The salt concentration in added electrolyte is preferentially comprised between 10 to 200 mM.

For the purpose of the present invention, the moisture content of sterilized soil is preferentially comprises between 10 and 200% of dry weight of soil.

Optionally, the soil matrix may be enriched with additives inducing or increasing its activation such as enzymes (e.g. enzymes involved in Krebs cycle), co-factors (e.g. NAD+/NADH), metals (e.g. Fe²⁺/³⁺), minerals (e.g. clay)... Examples of such additive also include cell-free cell extracts such as cell-free yeast extract as described in Example 2. These additives are preferably introduced initially in the sterilized soil; their concentration is preferably comprised between 1 and 20 mmole.L⁻¹ electrolytes, these ranges of concentration are expressed as a function of the initial volume of electrolyte added to the soil, for co-factors, between 1 and 3000 U.L⁻¹ electrolytes for enzymes depending on type of enzymes....

The working of the biofuel cell of the invention may require the addition of substrate consisting of carbonated organic compounds; substrate includes different carbohydrates (glucose, pyruvates, keto glutarate etc), polyol (e.g. glycerol) or alcohol (e.g. methanol). The concentration of the added substrate is preferably comprised between 5 and 100 mmole.L⁻¹ electrolytes.

The first conductive material (anode) is composed of a conductive material, such as a conductive metal, in particular platinum, copper, silver, aluminum, gold or steel, or carbon, for instance vitreous carbon, carbon fibers, fibers of carbon nanotubes.

The preferred form of this first conductive material is such that it offers a large exchange surface; it may be a wire, a mesh, a plate, a cylinder or fiber web...

The second conductive material (cathode) is also composed of conductive material, such as a conductive metal, in particular platinum, copper, silver, aluminum, gold or steel, or carbon, for instance vitreous carbon, carbon fibers, fibers of carbon nanotubes, or else.

The preferred form of this second conductive material is such that it offers a large exchange surface; it may be a wire, a mesh, a plate, a cylinder or fiber web...

Optionally a redox polymer is applied on the anode and/or the cathode in order to improve the electrical conduction between the sterilized soil matrix and the second conductive material and also the stability of the system; the redox polymer may, for example, be chosen from ferrocene-, osmium- and ruthenium-based polymers and conductive polymers such as, for example, polypyrrole and polyaniline.

Preferably, the anode and the cathode of the biofuel cell of the invention are separated by a proton exchange membrane such as nafion,

In a particular embodiment of the biofuel cell of the invention, the conductive material of the cathode is partially entrapped in a second biocatalytic complex composed of a sterilized soil matrix and optionally a second electrolyte. Said second biocatalytic complex composed of a sterilized soil matrix and said second electrolyte are as defined before. In such embodiment, the electrolyte of the anode and the second electrolyte are the same.

The present invention also refers to the use of a biocatalytic complex composed of:
- a sterilized soil and optionally an electrolyte, and
- a conductive material partially entrapped into said soil,
as an electrode in a biofuel cell.

The sterilized soil, electrolyte and conductive material are as defined above.

The present invention further refers to a process of electricity generation using the biofuel cell according to the invention, said process comprising the steps of preparing a biofuel cell as described before and of collecting the generated electricity.

Optionally, the process of electricity generation comprises an additional step of introducing substrate and/or additives in the sterilized soil of the anode of said biofuel cell.

The present invention also refers to a bioreactor for the electrochemical synthesis of organic molecules composed of:
- an anode comprising a first biocatalytic complex composed of a first sterilized soil and optionally a first electrolyte in the presence of H₂O, and a first conductive material partially entrapped into said first sterilized soil;
- a cathode comprising a second biocatalytic complex composed of a second sterilized soil and optionally a second electrolyte in presence of CO₂, and a second conductive material partially entrapped into said second sterilized soil;
- an electric generator connected to said anode and cathode.

The working of the bioreactor for the electrochemical synthesis of organic molecules of the invention may require the addition of additives and/or electrolytes as previously defined.

The present invention further relates to a process of electrochemical synthesis of organic molecules using the bioreactor for the electrochemical synthesis of organic molecules as described above comprising the steps of:
- introducing additives in the first/second sterilized soil of said bioreactor, and
- recovering the sterilized soil enriched in said synthesized organic molecules.

In one embodiment the synthesized organic molecules are fuels that can be used as source of energy in proposed biofuel cell or other systems.

In another embodiment, synthesized organic molecules are substance of interest and are purified.
Description of the figures:
Figure 1 is a graph showing the rate of total CO₂ emissions from irradiated soils with and without addition of ¹³C-labelled glucose (S and S+G treatments, respectively) as described in Examples 1 and 2.
Figure 2 is a graph showing the emission rate of ¹³C-labelled CO₂ from the irradiated soil amended with ¹³C-labelled glucose (S+G treatment) as described in Examples 1 and 2.
Figure 3 is a graph showing the rate of total CO₂ emissions from yeast extract incubated with glucose (G+YE), irradiated soil with ¹³C-labelled glucose (S+G) and irradiated soil with ¹³C-labelled glucose and yeast extract (S+G+YE) as described in Example 2.
Figure 4 is a graph showing the emission rate of ¹³C-labelled CO₂ from yeast extract incubated with ¹³C-labelled glucose (G+YE), yeast extract incubated with ¹³C-labelled glucose and irradiated soil (S+G+YE) and irradiated soil incubated with ¹³C-labelled glucose (S+G).
Figure 5 is a graph showing the emission rate of ¹³C-labelled CO₂ from yeast extract with ¹³C-labelled glucose and irradiated soil (S+G+YE) and irradiated soil incubated with ¹³C-labelled glucose (S+G).
Figure 6 is a scheme of the fuel cell described in Example 3; it is composed of an anode generating a gradient of H⁺ and electrons from the oxidation of organic substrates. The complete oxidation of substrates at the anode is ensured by the diversity of catalysts present in soil particles. The reduction of O₂ into H₂O at the cathode is mediated by platinum.
Figure 7 is a scheme of the fuel cell describes in Examples 4 and 5; it is composed of an anode generating a gradient of H⁺ and electrons from the oxidation of organic substrates. The complete oxidation of substrates at the anode is ensured by the diversity of catalysts present in soil particles. The reduction of O₂ into H₂O at the cathode is mediated by catalysts of soil matrix.
Figure 8 is a scheme of the electrochemical production unit described in Example 6. The unit produces small organic C molecules (CHO) from carbon dioxide (CO₂) and water (H₂O) using the energy provided by an electric current. The reactions are catalyzed by a soil matrix prepared with γ-irradiated-soil. The water is oxidised into oxygen (O₂) at the cathode while the CO₂ is reduced into CHO at the cathode using the protons (H+) released by the oxidation of water. The protons (H⁺) can also be reduced into H₂ at the cathode.

### Example 1 - Setting a highly persistent (>800 days) oxidative activity in a soil matrix.

A natural soil matrix where living cells have been fully destroyed is able to maintain an oxidative process during at least 1606 days. The oxidative process leads to the decarboxylation of diverse organic C compounds present in the soil matrix and ¹³C-labelled glucose added to the soil matrix.

### Method

*Preparation of the soil matrix*. The samples were from the 0-20 cm soil layer at the site of Theix (Massif Central, France). The soil is a sandy loam Cambisol developed on granitic rock. The soil has the following characteristics: pH_{water} = 6.5, carbon content = 39 g C kg⁻¹, clay = 26%, silt = 25%, sand = 49%. Fresh soil samples were mixed, sieved at 2 mm, dried to 5% (w/w of water per dry soil) and irradiated with gamma rays at 45 kGy (⁶⁰Co, IONISOS, ISO14001, France).

*Incubations of soil matrix.* Experimental microcosms consisted of 20 g of γ-irradiated-soil incubated with 6 mL of water (S treatment) or 5 mL of water and 1 mL of ¹³C-labelled glucose solution (S+G treatment). The glucose solution contained 60 mg C-glucose mL⁻¹ and was prepared by mixing unlabelled glucose with ¹³C labelled glucose (C₆ Atom% ¹³C = 99%) to obtain a final delta ¹³C of 3712‰. The glucose solution was sterilized by filtration at 0.2µm. Three replicates per treatment were prepared. The volumes of water and glucose solution were calculated to incubate soils at a water potential of -100 kPa. Water and soil matrix microcosms were incubated at 25°C for 845 days. The CO₂ accumulation and O₂ consumption generated by the oxidative metabolism in the soil matrix were analysed after 0.5, 0.8, 1.4, 3.5, 10.3, 19.3, 53, 142, 1125 and 1606 days of incubation. After each gas analysis, flasks were flushed with synthetic air (O₂, 20%; N₂, 80%) moistened by bubbling in water and sterilized by filtration at 0.2 µm. All manipulations were done under sterile conditions and the sterility of microcosms was verified throughout the incubation through direct fluorescence microscopic observations and TSA-FISH method.

*Gals analysis,* O₂ and CO₂ concentrations were analyzed by gas chromatography. The isotopic composition (δ ¹³C) of CO₂ was quantified using a cavity ring down spectrometer analyzer coupled to a small injection system (Picarro 2131-i analyzer, (Picarro Inc., Santa Clara, CA, USA). The gas samples were diluted with synthetic air (O₂, 20%; N₂, 80%) when CO₂ concentration exceeded the operating range of the analyzer. For each period of incubation, the cumulated amount of CO₂ was divided by the duration of the period (in days) to calculate the average daily CO₂ emission rate. The daily CO₂ emission rate was expressed in mg C-CO₂ (mg of carbon released as the form of CO₂) per day per incubation flask.

### Results

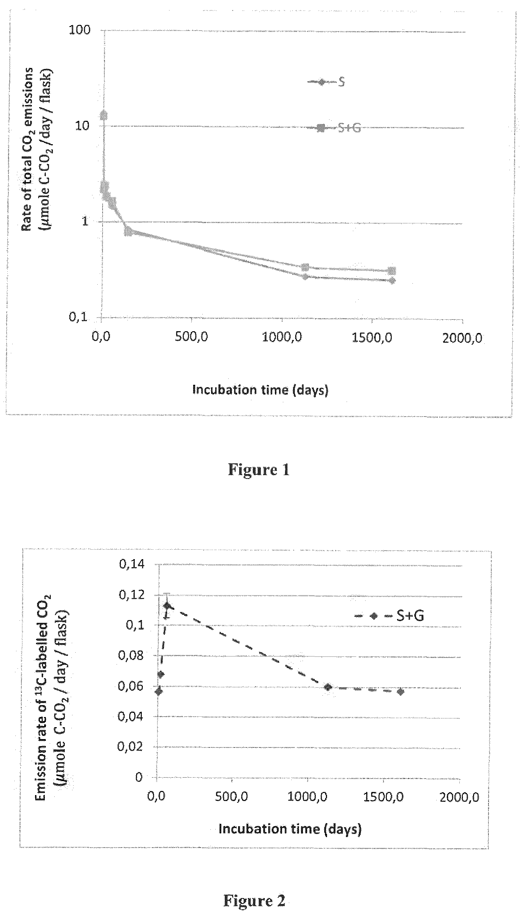

The soil matrix mediated oxidation activity of soil organic C into CO₂ during the 1606 days of incubation (see Figure 1). The rate of total CO₂ emissions was maximal during the first hours of incubation with 13.2 ± 0.5 µmol C-CO₂ / day / flask and rapidly decreased with time during the first days of incubation. After 10.3 days of incubation, the rate of total CO₂ emissions reached 2.36 ± 0.18 µmol C-CO₂ / day / flask. Thereafter, the rate of total CO₂ emissions slowly decreased with time to finally stabilize at 0.31 ± 0.007 µmol C-CO₂ / day / flask after 1125 days of incubation. The soil oxidation activity did not significantly change between 1125 and 1606 days of incubation. These results demonstrate the role of soil matrix in providing a persistent oxidative process able to transform soil organic C in CO₂.

The addition of glucose to soil had no effect on total CO₂ emissions during the first 145 days of incubation. From 845 to 1606 days of incubation, glucose addition significantly increased the rate of total CO₂ emissions. These results indicate that the oxidative process carried out by the soil matrix has access to reserve of organic C present in soil. Therefore, the soil oxidative process can maintain during hundreds days of incubation without external addition of primary substrates. After a long period of incubation, when the availability of soluble C becomes limiting, the soil oxidative process can be stimulated by the addition of primary substrate.

The soil matrix oxidized the labelled ¹³C- glucose into ¹³C-CO₂ throughout the 1606 days of incubation (see Figure 2). The rate of glucose oxidation changed with time. It increased with time until to peak at 0.113 ± 0.008 µmol C-CO₂ / day / flask after 53 days of incubation. Thereafter, the rate of glucose oxidation decreased with time to finally stabilize to 0.0573 ± 0.0008 µmol C-CO₂ / day / flask at 1606 days of incubation. These results demonstrate the capacity of soil matrix to deeply oxidize highly stable molecules such as glucose.

Comparison of Figures 1 & 2 shows that the rate of ¹³C-CO₂ emissions is low compared to that of total CO₂ emissions. This result signifies that the main source of primary substrates for oxidation process is the soil organic C but not the added glucose.

### Example 2 - Increasing the oxidative activity of a soil matrix by adding a cell extract.

The possibility of increasing the oxidative activity of a sterilized soil matrix by adding the intracellular content of yeasts is demonstrated in this example. The supply of yeast extract significantly increased the rate of total CO₂ emissions and glucose oxidation from soil matrix during 1606 days of incubation. Without soil matrix, the oxidative activity of yeast extract rapidly and dramatically decreased over the time. After 1606 days of incubation, the oxidation rate induced by the yeast extract is 31 times higher in the soil matrix than in solution. These findings demonstrate 1) the possibility of manipulating the oxidative activity of soil matrix by adding cell components and 2) the capacity of soil matrix to stabilize a respiratory-like cellular metabolism.

### Method

*Preparation of soil matrix.* The samples were from the 0-20 cm soil layer at the site of Theix (Massif Central, France). The soil is sandy loam Cambisol developed on granitic rock. The soil has the following characteristics: pH_{water} = 6.5, carbon content = 39 g C kg⁻¹, clay = 26%, silt = 25%, sand = 49%. Fresh soil samples were mixed, sieved at 2 mm, dried to 5 % (w/w of water per dry soil) and irradiated with gamma rays at 45 kGy (⁶⁰Co, IONISOS, ISO14001, France).

*Procluction of cell-free yeast-extract. Pichia pastoris* cells were cultured at 28°C in a 1.5 L capacity Applikon bioreactor containing synthetic medium. This medium contained 80 µg L-1 D-biotin, 40 g L-1 glycerol, and a mixture of micro and macronutrients. The pH of the medium was regulated at 5 using a NH₄OH solution (15%, v/v) that also served as a nitrogen source. Dissolved O₂ was measured using a polarographic probe and was maintained at over 30% saturation by stirring up to 1800 rpm and aeration (an injection of 1L of air per liter of medium per minute). The yeast culture was harvested at the end of the growth phase by centrifugation at 5000 x g for 10 min at 5°C to yield a hard pellet. To remove the culture medium, cells were washed and re-centrifuged three times in potassium phosphate buffer (0.1M, pH = 6.5). The cell pellet was re-suspended in a small volume of potassium phosphate buffer (Vyeast/Vbuffer = 2/1) before cells were disrupted with a French pressure cell press (100 MPa). Unbroken cells and large cell debris were removed from the yeast extract by centrifugation at 25000 x g and 5°C. The yeast extract was filtered under sterile conditions at 0.2 µm to obtain a cell-free extract. The cell-free yeast extract was immediately incorporated into water and soil matrix microcosms under sterile conditions.

*Yeast extract. incubation in solution and soil matrix.* Experimental microcosms consisted of 5 mL of cell-free yeast extract and 1 mL of ¹³C-labelled glucose with or without addition of 20g of γ-irradiated-soil (S+G+YE and G+YE treatments, respectively) placed in 250mL airtight flasks. Irradiated-soil with glucose was incubated as control (S+G treatment). The glucose solution contained 60 mg glucose mL⁻¹ and was prepared by mixing unlabelled glucose with ¹³C labelled glucose (C₆ Atom% ¹³C = 99%) to obtain a final delta ¹³C of 3712‰. The glucose solution was sterilized by filtration at 0.2µm. Three replicates per treatment were prepared. The volume of solutions (glucose + yeast extract) were adjusted to incubate soils at a water potential of-100 kPa. Water and soil matrix microcosms were incubated at 25°C for 845 days. The CO₂ accumulation and O₂ consumption generated by the oxidative metabolism in soil matrix and yeast extract were analyzed after 0.5, 0.8, 1.4, 3.5, 10.3, 19.3, 53, 142, 1125 and 1606 days of incubation. After gas analysis, flasks were flushed with synthetic air (O₂, 20%; N₂, 80%) moistened by bubbling in water and sterilized by filtration at 0.2µm. All manipulations were done under sterile conditions and the sterility of microcosms was verified throughout the incubation through direct fluorescence microscopic observations and TSA-FISH method.

### Results

The incubation of yeast extract with glucose in solution or soil matrix triggered intense oxidative activities during the first hours of incubation (see Figure 1). The rate of total CO₂ emissions was higher in G+YE than in S, S+G or S+G+YE treatments during the first hours of incubation. This short-term negative effect of soil matrix is explained by the limited diffusion of substrates and co-factors in soil matrix compared to water. It might also be due to interactions between soil particles and enzymes decreasing their activity. However, the rate of total CO₂ emissions in G+YE decreased below that of S+G or S+G+YE treatments from day 19.3 until the end of incubation. After 1606 days of incubation, the oxidative activity is in average 16 times higher in S+G or S+G+YE treatment than in G+YE treatment. The lower oxidative activity in G+YE treatment cannot be afforded to a lack of substrate since only 30% of added labelled glucose were oxidized (data not shown). These results demonstrate the exceptional stability of soil catalysts compared to free catalysts in solutions. The catalysts of soil matrix were able to mineralize a diversity of C sources including soil organic C compounds and added ¹³C-labelled glucose (see Figures 1 & 2).

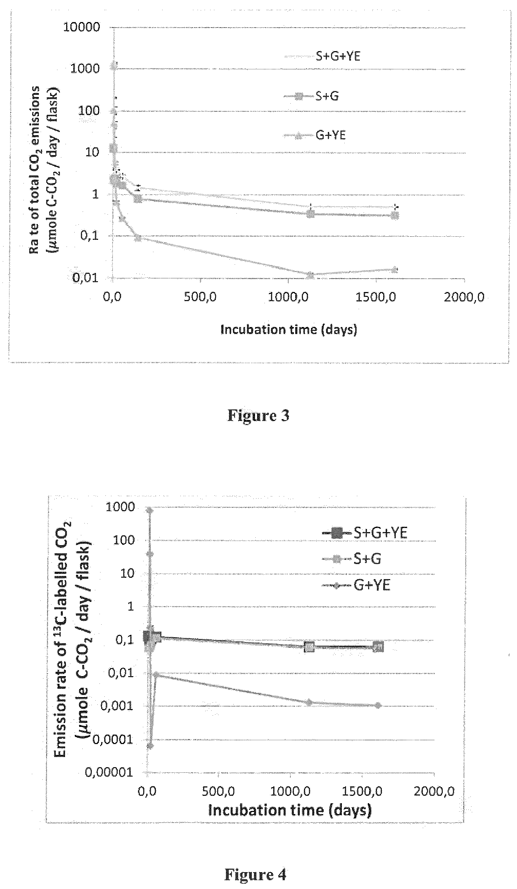

The addition of yeast extract significantly increased rate of total CO₂ emissions and glucose oxidation from soil matrix (see Figure 3 & Table II). The stimulation of soil oxidative activity was maximal during hours following yeast extract addition with 1534% increase of total CO₂ emissions at 0.5 day of incubation (Table II). The stimulation of total CO₂ emissions rapidly decreased from 0.5 to 3.5 days of incubation and tends to stabilize thereafter. After 1606 days of incubations, the rate of total CO₂ emissions was increased by 60% in the S+G+YE treatment compared to the control S+G. The oxidation of ¹³C-labelled glucose into ¹³CO₂ was also stimulated by the addition of yeast extract though the stimulation was less pronounced than for total CO₂ emissions. After 1606 days of incubation, the rate of glucose oxidation was increased by 12% in the S+G+YE treatment compared to the control S+G. Collectively, these results demonstrate the possibility of increasing the oxidative process generated in a soil matrix over long-term (>1600 days) by adding a cell extract.

**Table II. Rate of total CO₂ emissions from irradiated soil incubated with ¹³C-labelled glucose (S+G) and irradiated soil ¹³C-labelled glucose and yeast extract (S+G-E YE), and percentage increase of rate of total CO₂ emissions triggered by addition of yeast extract.**

| Time (days) | Rate of total CO₂ | | % increase |
|---|---|---|---|
| | emissions (µmole C-CO₂ /day /flask) | | |
| | S+G | S+G+YE | |
| 0.50 | 12.71 | 207.66 | 1534% |
| 3.54 | 2.19 | 4.53 | 107% |
| 10.29 | 2.42 | 5.63 | 133% |
| 19.29 | 1.86 | 3.87 | 109% |
| 53.00 | 1.65 | 2.73 | 65% |
| 142.00 | 0.78 | 1.46 | 88% |
| 1125.00 | 0.34 | 0.52 | 51% |
| 1606.00 | 0.32 | 0.52 | 62% |

### Example 3 - Air breathing fuel cell using soil matrix catalysts at the anode.

This example demonstrates the possibility of building an air breathing fuel cell by using soil matrix catalysts at the anode. The anode made with sterilized soil was able to convert chemical energy from a variety of fuels such as glycerol, pyruvate and keto-glutarate into electricity. These fuels have high energy-storage densities (higher than lithium-ion batteries) and were completely oxidized by soil catalysts. The very high stability of soil catalysts can maintain fuel oxidation and electricity production during hundred days.

### Method

*Preparation of soil matrix.* The samples were from the 0-20 cm soil layer at the site of Theix (Massif Central, France). The soil is sandy loam Cambisol developed on granitic rock. The soil has the following characteristics: pH_{water} = 6.5, carbon content = 39 g C kg⁻¹, clay = 26%, silt = 25%, sand = 49%. Fresh soil samples were mixed, sieved at 2 mm, dried to 5 % (w/w of water per dry soil) and irradiated with gamma rays at 45 kGy (⁶⁰Co, IONISOS, ISO14001, France).

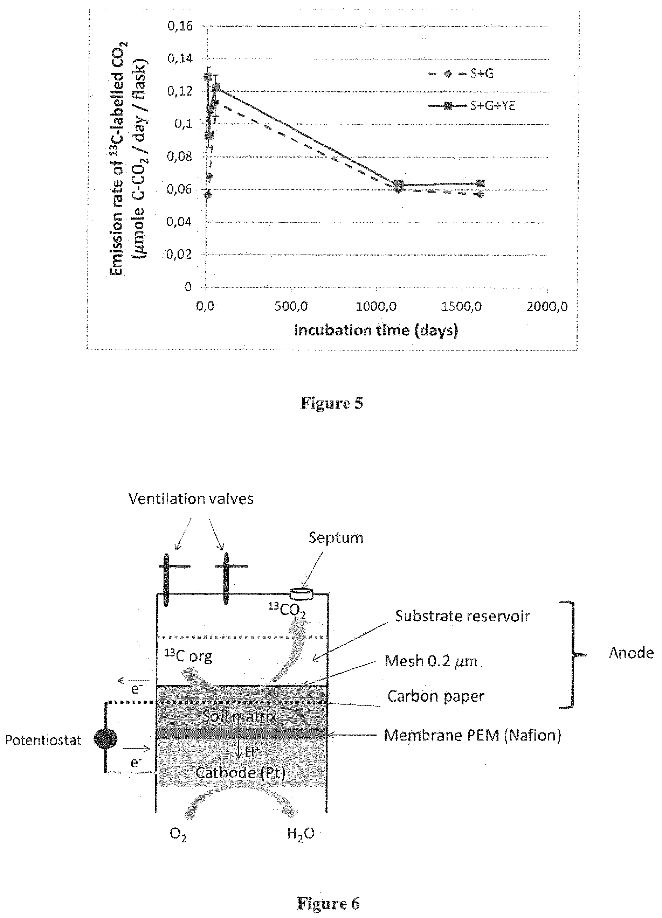

*Anode preparation.* The anode consisted of 15 g of γ-irradiated-soil, 15 mL of electrolytes and a carbon paper collecting the electrons generated by oxidation reactions (see Figure 6). Four substrate treatments were tested: no substrate addition, glycerol, pyruvate and keto-glutarate. For the no substrate treatment, electrolytes contained 0.1 M potassium phosphate buffer (pH 7.5), 10 mM MgCl₂, 0.5 MnCl₂. For substrate treatment, 10 mM of glycerol, pyruvate or keto-glutarate were added to 0.1 M potassium phosphate buffer (pH 7.5), 10 mM MgCl₂ and 0.5 MnCl₂. The glycerol, pyruvate and keto-glutarate were ¹³C labelled (delta ¹³C = 2500 ‰). The ¹³C labelling enabled to separate the oxidation of soil organic C and added substrates.

*Cathode preparation.* The cathode was platinum gauze (20 cm²), electrodeposited with platinum-black. The catholyte (0.1 M potassium phosphate buffer (pH 7.5)) was continuously saturated with O₂.

*Fuel cell assembling.* The anode and cathode were fixed into a polymethylmethacrylat (PMMA) tube of 5 cm diameter and 8 cm high. The anode was surmounted by a reservoir of 100 mL where CO₂ released by oxidation reactions could accumulate (see Figure 6). The reservoir was also used to add electrolyte with fresh substrate when the substrate added at the beginning of the experiment was exhausted. The anode was separated from the reservoir with a polyvinylidene mesh of 0.2 µm pore size to maintain soil matrix in contact with the carbon paper and the proton exchange membrane (PEM). The mesh was also used to prevent soil matrix from microbial contamination during cell loading with fresh substrate. The reservoir was equipped of two valves in order to flush reservoir and anode with pure N₂ at the beginning of experiment and after each gas measurement. These flushes ensured the anoxic condition at the anode. The reservoir was also equipped of a septum to allow gas sampling. All components of fuel cell were sterilized and assembled under sterile conditions.

*Measurement of soil organic C and added substrate oxidation.* The total oxidation of soil organic C and added substrates were measured during periods of inactivity and activity of fuel cell. The measurement during cell inactivity allowed determining the stability of fuel cell in absence of any connection. The measurement during cell activity allowed determining the efficiency of converting chemical energy in electricity. The total oxidation of soil organic C and added substrates corresponded to the accumulation of CO₂ in cell reservoir. The CO₂ accumulation was quantified by repeated measurement of CO₂ concentration by chromatography after sampling of gas reservoir. The oxidation of added ¹³C-labelied substrate was specifically quantified by following the production of ¹³C-labelled CO₂. The isotopic composition (delta ¹³C) was determined using a cavity ring down spectrometer analyzer coupled to a small injection system (Picarro 2131-i analyzer, Picarro Inc., Santa Clara, CA, USA).

*Electrochemical characterization of fuel cell.* All electrochemical tests were performed using a multi-potentiostat interfaced to a PC. These tests included power density, current density and open circuit potential, as well as charging and discharging profile output. The stability over time of fuel cell was determined by conducting electrochemical tests after 10, 50 and 100 days of cell building. Additional inputs of ¹³C-labelled substrates were performed when substrates were exhausted.

### Example 4 - Air breathing fuel cell using soil matrix catalysts at the anode and at the cathode.

This example demonstrates the possibility of building an air breathing fuel cell by using soil matrix catalysts at anode and cathode. The anode made with sterilized soil was able to convert chemical energy from a variety of biofuels such as glycerol, pyruvate and keto-glutarate into electricity. These fuels have high energy-storage densities (higher than lithium-ion batteries) and were completely oxidized by soil catalysts. At the cathode, soil catalysts efficiently reduced O₂ into H₂O using the flux of H⁺ generated by the anode. The very high stability of soil catalysts allows maintaining fuel oxidation and electricity production during at least hundred days. These findings demonstrate the possibility of building an air breathing fuel cell without using any rare metals as catalyst.

*Preparation of soil matrix.* The samples were from the 0-20 cm soil layer at the site of Theix (Massif Central, France). The soil is sandy loam Cambisol developed on granitic rock. The soil has the following characteristics: pH_{water} = 6.5, carbon content = 39 g C kg⁻¹, clay = 26%, silt = 25%, sand = 49%. Fresh soil samples were mixed, sieved at 2 mm, dried to 5 % (w/w of water per dry soil) and irradiated with gamma rays at 45 kGy (⁶⁰Co, IONISOS, ISO14001, France).

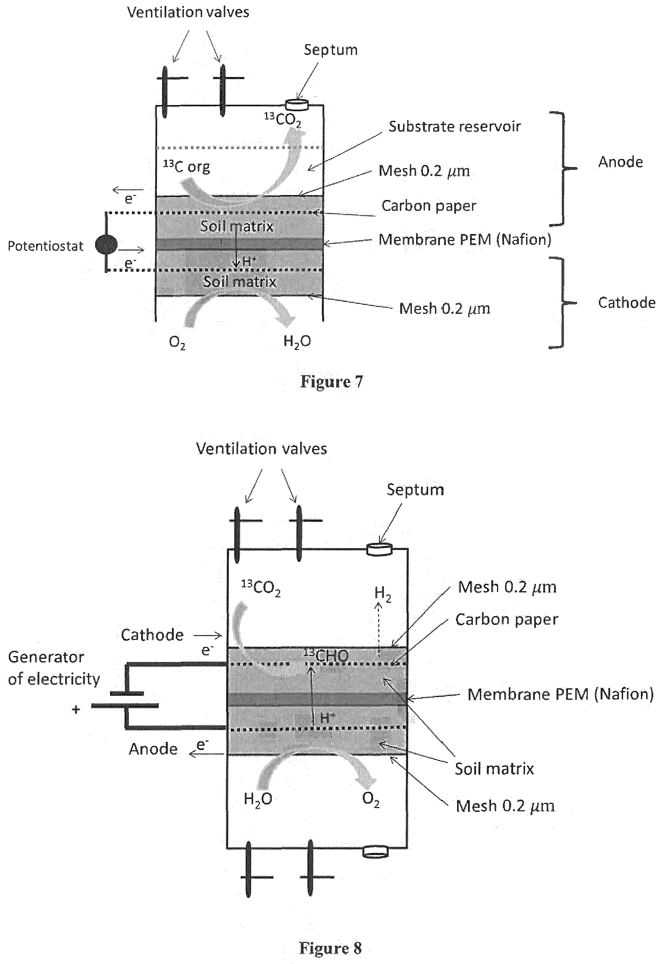

*Anode preparation.* The anode consisted of 15 g of γ-irradiated-soil, 15 mL of electrolytes and a carbon paper collecting the electrons generated by oxidation reactions (see Figure 7). Four substrate treatments were tested: no substrate addition, glycerol, pyruvate and keto-glutarate. For the no substrate treatment, electrolytes contained 0.1 M potassium phosphate buffer (pH 7.5), 10 mM MgCl₂, 0.5 MnCl₂. For substrate treatment, 10 mM of glycerol, pyruvate or Keto-glutarate were added to 0.1 M potassium phosphate buffer (pH 7.5), 10 mM MgCl₂ and 0.5 MnCl₂. The glycerol, pyruvate and keto-glutarate were ¹³C labelled (delta ¹³C = 2500 ‰). The ¹³C labelling enabled to separate the oxidation of soil organic C and added substrates.

*Cathode preparation.* The cathode consisted of 15 g of γ-irradiated-soil, 7 mL of electrolytes and a carbon paper transferring the electrons to soil catalysts (see Figure 7). Electrolytes were composed of 0.1 M potassium phosphate buffer (pH 7.5), 10 mM MgCl₂, 0.5 MnCl₂. The soil matrix was placed in contact of the proton exchange membrane (PEM, Nafion) in one side and the air from the other side. The soil matrix was protected from airborne microorganisms thanks to a polyvinylidene mesh of 0.2 µm pore size. The side in contact with air was saturated in O₂.

*Fuel cell assembling.* The anode and cathode were fixed into a polymethylmethacrylate (PMMA) tube of 5 cm diameter and 8 cm high. The anode was surmounted by a reservoir of 100 mL where gas released by oxidation reactions can accumulate as represented in Figure 7. The reservoir was also used to add electrolyte with fresh substrate when the substrate added at the beginning of the experiment was exhausted. The anode was separated from the reservoir with a polyvinylidene mesh of 0.2 µm pore size to maintain soil matrix in contact with the carbon paper and the proton exchange membrane (PEM). The mesh was also used to prevent soil matrix from microbial contamination during cell loading with fresh substrate. The reservoir was equipped of two valves in order to flush reservoir and anode with pure N₂ at the beginning of experiment and after each gas measurement. These flushes ensured the anoxic condition at the anode. The reservoir was also equipped of a septum to allow gas sampling. All components of fuel cell were sterilized and assembled under sterile conditions.

*Measurement of soil organic C and added substrate oxidation.* The total oxidation of soil organic C and added substrates were measured during periods of inactivity and activity of fuel cell. The measurement during cell inactivity allowed determining the stability of fuel cell in absence of any connection. The measurement during cell activity allowed determining efficiency of converting chemical energy in electricity. The total oxidation of soil organic C and added substrates corresponded to the accumulation of CO₂ in the cell reservoir. CO₂ accumulation was quantified by repeated measurements of CO₂ concentration by chromatography after sampling of gas reservoir. The oxidation of added ¹³C-labelled substrate was specifically quantified by following the production of ¹³C-labelled CO₂. The isotopic composition (delta ¹³C) was determined using a cavity ring down spectrometer analyzer coupled to a small injection system (Picarro 2131-i analyzer, Picarro Inc., Santa Clara, CA, USA).

*Electrochemical characterization of fuel cell.* All electrochemical tests were performed using a multi-potentiostat interfaced to a PC. These tests included power density, current density and open circuit potential, as well as charging and discharging profile output. The stability over time of the fuel cell was determined by conducting electrochemical tests after 10, 50 and 100 days of cell building. The potential of the anode and cathode were referenced to a saturated calomel electrode located within the anode and cathode compartments, respectively. Additional inputs of ¹³C-labelled substrates were performed when substrates were exhausted.

### Example 5 - Air breathing fuel cell with an anode bio-enhanced by the transfer of cell extract to soil matrix.

This example shows the possibility of enhancing the power of the air breathing fuel cell by transferring yeast extract in soil matrix. The supply of yeast extract in soil matrix significantly increased the catalytic power of the anode. Consequently, the current density and power density of the fuel cell were significantly increased. This stimulating effect of yeast extract was maintained during hundreds of days.

*Production of cell-free yeast*-*extract*. *Pichia pastoris* cells were cultured at 28°C in a 1.5 L capacity Applikon bioreactor containing synthetic medium. This medium contained 80 µg L⁻¹ D-biotin, 40g L⁻¹ glycerol and a mixture of micro and macronutrients. pH of the medium was regulated at 5 using a NH₄OH solution (15%, v/v) that also served as a nitrogen source. Dissolved O₂ was measured using a polarographic probe and was maintained at over 30% saturation by stirring up to 1800 rpm and aeration (an injection of 1 L of air per liter of medium per minute). The yeast culture was harvested at the end of the growth phase by centrifugation at 5000 x g for 10 min at 5°C to yield a hard pellet. To remove the culture media, the sediment was washed and re-decanted three times in 0.1 M potassium phosphate buffer (pH 7.5). The sediment was re-suspended in a small volume of potassium phosphate buffer (Vyeast/Vbuffer = 2/1) before cells were disrupted with a French pressure cell press (100 MPa). Unbroken cells and large cell debris were removed from the yeast extract by centrifugation at 25000 x g and 5°C. The yeast extract was filtered under sterile conditions at 0.2 µm to obtain a cell-free extract. The cell-free yeast extract was immediately incorporated into water and soil matrix microcosms under sterile conditions.

*Preparation of soil matrix.* The samples were from the 0-20 cm soil layer at the site of Theix (Massif Central, France). The soil is sandy loam Cambisol developed on granitic rock. The soil has the following characteristics: pH_{water} = 6.5, carbon content = 39 g C kg⁻¹, clay = 26%, silt = 25%, sand = 49%. Fresh soil samples were mixed, sieved at 2 mm, dried to 5% (w/w of water per dry soil) and irradiated with gamma rays at 45 kGy (⁶⁰Co, IONISOS, ISO14001, France).

*Anode preparation.* The anode consisted of 15 g of γ-irradiated-soil, 15 mL of electrolytes and a carbon paper collecting the electrons generated by oxidation reactions (see Figure 7). The electrolytes were composed of 15 mL of yeast extract with 10 mM pyruvate, 10 mM MgCl₂ and 0.5 MnCl₂. The pyruvate was ¹³C labelled (delta ¹³C = 2500 ‰). The ¹³C labelling enabled to separate the oxidation of soil organic C and added substrates. *Cathode preparation.* The cathode was platinum gauze (20 cm²), electrodeposited with platinum-black. The catholyte (0.1 M potassium phosphate buffer (pH 7.5))) was continuously saturated with O₂.

*Fusel cell assembling.* The anode and the cathode were fixed into a polymethylmethacrylate (PMMA) tube of 5 cm diameter and 8 cm high. The anode was surmounted by a reservoir of 100 mL where gas released by oxidation reactions can accumulate (see Figure 7). The reservoir was also used to add electrolyte with fresh substrate when the substrate added at the beginning of the experiment was exhausted. The anode was separated from the reservoir with a polyvinylidene mesh of 0.2 µm pore size to maintain soil matrix in contact with the carbon mesh and the proton exchange membrane (PEM). The mesh was also used to prevent soil matrix from microbial contamination during cell loading with fresh substrate. The reservoir was equipped of two valves in order to flush reservoir and anode with pure N₂ at the beginning of experiment and after each gas measurement. These flushes ensured the anoxic condition at the anode. The reservoir was also equipped of a septum to allow gas sampling. All components of fuel cell were sterilized and assembled under sterile conditions.

*Measurement of soil organic C and added substrate oxidation.* The total oxidation of soil organic C and added substrates were measured during periods of inactivity and activity of fuel cell. The measurement during cell inactivity allowed determining the stability of fuel cell in absence of any connection. The measurement during cell activity allowed determining efficiency of converting chemical energy in electricity. The total oxidation of soil organic C and added substrates corresponded to the accumulation of CO₂ in cell reservoir. The CO₂ accumulation was quantified by repeated measurement of CO₂ concentration by chromatography after sampling of gas reservoir. The oxidation of added ¹³C-labelled substrate was specifically quantified by following the production of ¹³C-labelled CO₂. The isotopic composition (delta ¹³C) was determined using a cavity ring down spectrometer analyzer coupled to a small injection system (Picarro 2131-i analyzer, Picarro Inc., Santa Clara, CA, USA).

*Electrochemical characterization of fuel cell.* All electrochemical tests were performed using a multi-potentiostat interfaced to a PC. These tests included power density, current density and open circuit potential, as well as charging and discharging profile output. The stability over time of the fuel cell was determined by conducting electrochemical tests after 10, 50 and 100 days of cell building. Additional inputs of ¹³C-labelled substrates were performed when substrates were exhausted.

### Example 6 - Bioreactor allowing electrochemical synthesis of organic molecules with soil matrix as catalyser.

This example shows the possibility of synthesis of organic molecules from CO₂ and H₂O using the energy provided by an electric current. The anode and the cathode were made with soil matrix and were saturated with H₂O and CO₂, respectively. The CO₂ was labelled with ¹³C . Application of a potential of -0,4V induced the release of O₂ at the anode indicating water electrolysis. The water electrolysis at the anode was paralleled to formation of ¹³C-labelled organic compounds and hydrogen at the cathode. These compounds could be isolated using soil extraction with water. Production of O₂, H₂ and ¹³C-labelled organic compounds was not detectable without connection of anode and cathode to electricity. These findings demonstrated the possibility of synthetizing organic molecules from O₂ and H₂O using electricity as source of energy.

*Preparation of soil matrix.* The samples were from the 0-20 cm soil layer at the site of Theix (Massif Central, France). The soil is sandy loam Cambisol developed on granitic rock. The soil has the following characteristics: pH_{water} = 6.5, carbon content = 39 g C kg⁻¹, clay = 26%, silt = 25%, sand = 49%. Fresh soil samples were mixed, sieved at 2 mm, dried to 5 % (w/w of water per dry soil) and irradiated with gamma ray at 45 kGy (⁶⁰Co, IONISOS, ISO14001, France).

*Anode preparation.* The anode consisted of 15 g of γ-irradiated-soil, 15 mL of electrolytes and a carbon paper collecting the electrons from the oxidation of H₂O into O₂ (see Figure 8). Electrolytes contained 0.1 M potassium phosphate buffer (pH 7.5), 10 mM MgCl₂ and 0.5 MnCl₂. The anode was connected to a reservoir (100 mL) filled with pure N₂. Cathode preparation. The cathode consisted of 15 g of γ-irradiated-soil, 15 mL of electrolytes and a carbon paper distributing the electrons into the soil matrix (see Figure 8). Electrolytes contained 0.1 M potassium phosphate buffer (pH 7.5), 10 mM MgCl₂ and 0.5 MnCl₂. The cathode was connected to a reservoir (100 mL) filled with pure CO₂. The CO₂ was ¹³C labelled (¹³C abundance = 99%) in order to trace the formation of small ¹³C-labelled organic C compounds in soil matrix.

*Electrode assembling*. The anode and cathode were fixed into a Polymethylmethacrylate (PMMA) tube of 5 cm diameter and 12 cm high (see Figure 8). The anode and cathode were separated with a proton exchange membrane (Nafion). The reservoirs connected to anode and cathode were equipped of septum enabling gas sampling. The reservoirs were also equipped of valves in order to regularly flush the anode and cathode with N₂ and CO₂, respectively.

*Production of O₂, H₂ and small ¹³C-labelled organic compounds.* A potential of -0,4V was applied between the anode and cathode to generate the electro-catalyses (see Figure 8). The potential applied with a potentiostat was maintained during three weeks. The current density uptake and electrons consumed by the electrochemical system were quantified with the potentiostat and expressed per unit of cathode area. The production of O₂ at the anode was quantified by measuring the pressure and the O₂ concentration in the reservoir connected to the anode. The production of H₂ at the cathode was quantified by measuring the pressure and the H₂ concentration in the reservoir connected to the anode. Concentration of O₂ and H₂ was measured by chromatography. The total amount of ¹³C-labelled compounds produced at the cathode was quantified by sampling 3 mL of cathode solution (mix of water & soil matrix). The solution was freeze dried before to be analyzed with an elemental analyzer coupled to an Isotop Ratio Mass Spectrometer. The soluble fraction of ¹³C-labelled organic compounds produced at the cathode was quantified after extraction of 3 mL of cathode solution with 3 mL of water and filtration at 0.45 µm. Samples were then examined by a TOC-meter coupled to an Isotop Ratio Mass Spectrometer in order to quantity the amount and delta ¹³C of soluble compounds. Samples were also analyzed by ultra-high-performance liquid chromatograph (HPLC) in order to determined the chemical composition of soluble compounds. To analyze for volatile fatty acids (VFAs), 1 mL of cathode solution was filtered through a 0,45 µm pore size filter and 50 µL of formic acid (50% v/v) was added. Samples were then analyzed by a gas chromatograph.

## Claims

1. Biofuel cell composed of:
- an anode comprising a biocatalytic complex composed of a sterilized soil and optionally an electrolyte, and a first conductive material partially entrapped into said sterilized soil; and
- a cathode comprising a second conductive material in presence of O₂
wherein soil matrix contains at least one of the two following properties:
- the presence of organic or mineral catalyzers including enzymes stabilized on soil particles (e.g. enzymes of Krebs cycle), metallic species (e.g. Fe²⁺/³⁺), minerals (e.g. clay) or other organo-mineral catalyzers; and/or
- the presence of organic or mineral particles allowing the stabilization of at least two different catalyzers.

2. Biofuel cell according to claim 1 wherein the conductive material of the cathode is partially entrapped in a second sterilized soil matrix comprising a second electrolyte.

3. Use of a biocatalytic complex composed of:
- a sterilized soil and optionally an electrolyte, and
- a conductive material partially entrapped into said soil,
as an electrode in a biofuel cell.

4. Process of electricity generation using the biofuel cell according to claim 1 comprising the steps of preparing said biofuel cell and of collecting the generated electricity.

5. Process according to claim 4, wherein said process comprises an additional step of introducing substrates and/or additives in the sterilized soil of the anode of said biofuel cell.

6. Bioreactor for the electrochemical synthesis of organic molecules composed of:
- an anode comprising a first biocatalytic complex composed of a first sterilized soil and optionally a first electrolyte in the presence of H₂O, and a first conductive material partially entrapped into said first sterilized soil;
- a cathode comprising a second biocatalytic complex composed of a second sterilized soil and optionally a second electrolyte in presence of CO₂, and a second conductive material partially entrapped into said second sterilized soil;
- an electric generator connected to said anode and cathode.

7. Process of electrochemical synthesis of organic molecules using the bioreactor of claim 6 comprising the steps of:
- introducing additives in the first/second sterilized soil of said bioreactor, and
- recovering said synthesized organic molecules.
